# EUROPÄISCHE PATENTSCHRIFT

(11) **EP 4 105 499 B1**
(45) Veröffentlichungstag und Bekanntmachung des Hinweises auf die Patenterteilung: **29.07.2026**
(21) Anmeldenummer: 22178525.6
(22) Anmeldetag: 10.06.2022
(51) Int. Cl.: F16B 13/12, F16B 13/06

(54) **DÜBEL**
DOWEL
GOUJON

(30) Priorität: 17.06.2021 DE 102021115710
(43) Veröffentlichungstag der Anmeldung: 21.12.2022
(73) Patentinhaber: TOX-Dübel-Technik GmbH, 72505 Krauchenwies (DE)
(72) Erfinder: Aleker, Hubert, 89597 Munderkingen (DE); Schmid, Dieter, 78333 Stockach (DE); Daniel, Wilhelm, 88690 Uhldingen (DE); Daniel, Kiesner, 88512 Mengen (DE)
(74) Vertreter: Stadler, Franz

(56) Entgegenhaltungen:
- DE-A1- 3 335 841
- DE-A1- 4 235 864
- DE-U1- 202006 019 559
- DE-U1- 202020 106 135

## Beschreibung

Die vorliegende Erfindung betrifft einen Dübel gemäß dem Oberbegriff des Anspruches 1 und ein Verankerungssystem gemäß dem Oberbegriff des Anspruches 15.

Dübel werden eingesetzt, um einen Fixierungsgegenstand, beispielweise ein Bild, eine Deckenlampe oder einen Hängeschrank, an einem Verankerungsgrund, insbesondere einem Mauerwerk oder einer Decke eines Gebäudes, zu befestigen.

Dübel werden in den Gebäuden für die unterschiedlichsten Anwendungen eingesetzt. Dabei werden auch Dübel in Nassräumen, beispielsweise in Bädern oder Duschen eingesetzt. In Nassräumen gelangt an das Ende einer Bohrung in dem Verankerungsgrund der Mauer Wasser und Feuchtigkeit, sodass dadurch diese in die Bohrung des Verankerungsgrundes eindringt und Schäden verursacht. Zur Vermeidung dieser Schäden ist eine aufwendige zusätzliche Abdichtung notwendig. Darüber hinaus ist es bekannt, um den Aufwand für die zusätzliche Abdichtung einzusparen, wasserdichte Dübel einzusetzen.

Die DE 198 45 696 A1 zeigt einen Dübel zur Aufnahme eines Befestigungsmittels z. B. einer Schraube, eines Hakens oder dgl. an einer Oberfläche, der im Wesentlichen aus einem Dübelkopf und einem an diesen anschließenden Dübelschaft besteht, wobei der Dübel am Dübelkopf oder in der Nähe des Dübelkopfes mindestens ein Abdichtungsmittel aufweist.

Die DE 20 2020 106 135 U1 zeigt einen Dübel mit einem Verankerungskörper zum Verankern des Dübels in einem Bohrloch in einem Verankerungsgrund und mit einem Hülsenkörper, der In Einbringrichtung hinter dem Verankerungskörper angeordnet ist, wobei der Hülsenkörper einen Schraubkanal aufweist in den ein Befestigungselement eingebracht werden kann, und wobei der Hülsenkörper einen Abdichtabschnitt aufweist, der den Schraubkanal in Umfangsrichtung als geschlossene Umfangswand umschließt, wobei an dem Verankerungskörper ein Verbindungsabschnitt angeordnet ist, der in den Hülsenkörper ragt, von diesem umschlossen ist und der durch Einbringen des Befestigungselements in den Schraubkanal radial aufspreizbar ist, derart, dass beim Aufspreizen des Verbindungsabschnitts zumindest ein Teil des Abdichtabschnitts radial nach außen bewegbar ist. Der Dübel ist mehrteilig ausgebildet mit einem Mehrkomponenten-Spritzgussverfahren mit einem ersten und zweiten Kunststoff.

Die DE 33 35 841 A1 offenbart einen Spreizdübel mit von einem Spreizelement aufweitbarer Spreizhülse, die einen vom einführseitigen Ende her längsgeschlitzten Spreizbereich und einen entgegen der Einführrichtung daran anschließenden Halsbereich mit wenigstens einem in die Zentralbohrung ragenden Ringwulst aufweist, wobei die Spreizhülse auf der Außenseite, dem Ringwulst gegenüberliegend, eine umlaufende Dichtlippe aufweist.

Die DE 42 35 864 A1 zeigt einen Dübel für Verankerungen von Schrauben in Bohrungen von Hohlwandungen aus elastischem Kunststoff aus einem Stück, welcher im Spritzgußverfahren hergestellt werden kann, wobei bei Montage das Mittelteil des Dübels (Stege) die Funktion von Flügeln, welche die Verankerung des Dübels an der Hohlwand bewirken, übernehmen.

Die DE 20 2006 019 559 U1 offenbart einen Spreiz- und Ausknickdübel aus Kunststoff mit einem widerstandsfähigen Dübelfuß mit axialem Durchgangsloch zum Selbsteinschneiden eines Gewindes, mit einem geschlossenen spreizdruckfreien Dübelhals und einem dazwischen liegenden aufspreizbaren Dübelkörper, wobei der Dübelkörper aus einem Dübelmantel besteht, der mit Längsschlitzen versehen ist, welche den Dübelmantel in vorzugsweise linksgängige spiralförmige Spreizschenkel unterteilt.

Die Aufgabe der vorliegenden Erfindung besteht deshalb darin, einen Dübel und ein Verankerungssystem zur Verankerung eines Fixierungsgegenstandes mittels einer Schraube in einer Bohrung in einem Verankerungsgrund zur Verfügung zu stellen, bei dem eine vollständige Abdichtung der Bohrung mit dem Dübel und einer Schraube als dem Verankerungssystem gewährleistet ist bei einer zuverlässigen und sicheren Befestigung des Fixierungsgegenstandes in unterschiedlichen Verankerungsgründen mit und ohne Hohlräumen und der Dübel in der Herstellung preiswert ist.

Weiterhin soll der Dübel beim Einführen des Dübels in die Bohrung nicht blockiert werden.

Diese Aufgabe wird gelöst mit einem Dübel zur Verankerung eines Fixierungsgegenstandes mittels einer Schraube in einer Bohrung in einem Verankerungsgrund und zur Abdichtung der Bohrung, umfassend eine Dübelhülse mit einer Innenseite und einer Außenseite, die einen vorderen Verankerungsbereich zur Verankerung in dem Verankerungsgrund und einen hinteren Abdichtbereich mit Abdichtmittel zur Abdichtung der Bohrung mit dem Dübel und der Schraube umfasst, an der Außenseite des Dübels an dem hinteren Abdichtbereich in Umfangsrichtung umlaufende Dichtringe ausgebildet sind als Abdichtmittel, einen in Längsrichtung sich erstreckenden Führungskanal, der von der Innenseite der Dübelhülse begrenzt ist, zur Aufnahme der Schraube, Spreizelemente, die an dem vorderen Verankerungsbereich an der Außenseite ausgebildet sind, wobei der Dübel einteilig ausgebildet ist und der Innendurchmesser des Führungskanales an dem Verankerungsbereich kleiner ist als der Innendurchmesser des Führungskanales an dem Abdichtbereich, wobei der Führungskanal zwischen dem Abdichtbereich und dem Verankerungsbereich von einem von dem hinteren Ende zu dem vorderen Ende des Dübels sich konisch verjüngenden Übergangsbereich begrenzt ist und in Längsrichtung zwischen den Dichtringen Ringnuten ausgebildet sind und das Volumen je einer Ringnut mit einer Abweichung von weniger als 30% dem Volumen des Dichtringes vor dieser Ringnut entspricht. Der Dübel ist einteilig und/oder einstückig ausgebildet, d. h. wird insbesondere mittels Spritzgießen in nur einem Spritzgussvorgang in einem Spritzgusswerkzeug aus Kunststoff hergestellt. In vorteilhafter Weise ist damit der Dübel einerseits in der Herstellung preiswert und ermöglicht eine besondere und sichere effektive Abdichtung von Bohrungen in einem Verankerungsgrund. Vorzugsweise ist der Dübel einstückig ausgebildet.

In einer zusätzlichen Variante beträgt die Länge in Längsrichtung des hinteren Abdichtbereiches wenigstens 10% oder 15% der Gesamtlänge des Dübels. Vorzugsweise beträgt die Länge in Längsrichtung des hinteren Abdichtbereiches weniger 90%, 70%. 50%, 30% oder 20% der Gesamtlänge des Dübels.

In einer weiteren Ausführungsform ist die Anzahl der Dichtringe größer als 2 oder 3.

Zweckmäßig weisen die Dichtringe eine unterschiedliche Form und/oder ein unterschiedliches Volumen auf. Insbesondere weisen die Dichtringe in einem Längsschnitt unterschiedliche Formen auf, vorzugsweise ist ein radialer äußerer Endbereich der Dichtringe konvex gekrümmt ausgebildet und/oder eben ausgebildet und vorzugsweise umfasst der radiale äußere Endbereich wenigstens 10 %, 20 % oder 30 % der radialen Ausdehnung des Dichtringes. Vorzugsweise sind die Dichtringe in einem Längsschnitt an einem radialen inneren Endbereich konkav gekrümmt ausgebildet und vorzugsweise umfasst der radiale innere Endbereich wenigstens 10 %, 20 % oder 30 % der radialen Ausdehnung des Dichtringes. Vorzugsweise unterscheiden sich die Volumina der Dichtringe um wenigstens 30%, 50%, 70%, 100%, 150%, 200% oder 300%.

**In** einer ergänzenden Ausführungsform sind in Längsrichtung zwischen den Dichtringen Ringnuten ausgebildet und das Volumen je einer Ringnut entspricht im Wesentlichen, insbesondere mit einer Abweichung von weniger als 20% oder 10%, dem Volumen des Dichtringes vor dieser Ringnut. Der je eine Dichtring vor der je einen Ringnut ist der unmittelbare Dichtring mit dem größeren Abstand zu dem hinteren Ende des Dübels als die Ringnut. Vorzugsweise unterscheiden sich die Volumina der Ringnuten um wenigstens 30%, 50%, 70%, 100%, 150%, 200% oder 300%.

**In** einer ergänzenden Ausgestaltung ist bzw. sind an dem Dübel wenigstens ein Längsschlitz, vorzugsweise zwei diametral gegenüberliegende Längsschlitze, ausgebildet, um die Bildung von wenigstens einem Knoten und/oder wenigstens einer Hintergreifung zu erleichtern. Vorzugsweise beträgt die Länge des Längsschlitze wenigstens 10 %, 20 %, 30 %, 40 % oder 50 % der Länge des Dübels.

**In** einer weiteren Ausführungsform ist an je einem Ende, insbesondere an beiden Enden, des je wenigstens einen Längsschlitzes eine Aufweitung ausgebildet und vorzugsweise ist die Aufweitung von einer konkav gekrümmten Oberfläche des Materials des Dübels begrenzt, um die Bildung von wenigstens einem Knoten und/oder wenigstens einer Hintergreifung zu erleichtern. Vorzugsweise ist die Ausdehnung der Aufweitung in der Tangentialrichtung um 10 % oder 20 % größer als die Ausdehnung und/oder Breite des übrigen Längsschlitze in der Tangentialrichtung. Vorzugsweise weist der Längsschlitze in der Tangentialrichtung eine im Wesentlichen konstante, insbesondere mit einer Abweichung von weniger als 10 %, 20 % oder 30 %, radiale Ausdehnung und/oder Breite auf. Die Längsschlitze vorzugsweise in Kombination mit den Aufweitungen erhöhten die Verformbarkeit des Dübels und reduzieren damit die Steifigkeit des Dübels, so dass Knoten und/oder Hintergreifungen bereits bei kleinen, auf den Dübel wirkenden Kräften und Momenten entstehen.

**In** einer weiteren Variante beträgt die Außenfläche oder die Summe der Außenflächen des wenigstens einen Längsschlitzes zwischen 1% und 40%, insbesondere zwischen 3% und 30% der Gesamtaußenfläche des Dübels. Die Gesamtaußenfläche des Dübels umfasst die Außenfläche des wenigstens einen Längsschlitzes. Die Außenfläche des wenigstens einen Längsschlitzes ist die Fläche des wenigstens einen Längsschlitzes an der Außenseite des Dübels. Die Gesamtaußenfläche des Dübels ist die gesamte Fläche des Dübels an der Außenseite.

Vorzugsweise ist die maximale radiale Ausdehnung des Dübels an dem hinteren Abdichtbereich von dem radialen Ende der Dichtringe zu einer zentrischen Längsachse des Dübels größer, insbesondere um wenigstens 5%, 10%, 20% oder 30% größer, als die maximale radiale Ausdehnung an dem vorderen Verankerungsbereich von dem radialen Ende der Spreizelemente zu der zentrischen Längsachse des Dübels.

**In** einer weiteren Ausgestaltung ist an einem vorderen Endbereich des Dübels ein Zusatzbereich als Kopf ausgebildet. Der Zusatzbereich fungiert insbesondere als Mutter zur Ausbildung eines Knotens bei Hohlräumen in dem Verankerungsgrund.

**In** einer weiteren Ausführungsform sind an der Außenseite des Zusatzbereiches keine radialen Vorsprünge, insbesondere keine Spreizelemente, ausgebildet.

**In** einer weiteren Variante ist der Innendurchmesser des Führungskanales an dem Verankerungsbereich kleiner als 50%, 60%, 70%, 80%, 90% oder 95% des Innendurchmessers des Führungskanales an dem Abdichtbereich.

**In** einer zusätzlichen Ausgestaltung ist der Innendurchmesser des Führungskanales an dem Zusatzbereich kleiner als der Innendurchmesser des Führungskanales an dem Verankerungsbereich, insbesondere ist der Innendurchmesser des Führungskanales an dem Zusatzbereich kleiner als 50%, 60%, 70%, 80%, 90% oder 95% des Innendurchmessers des Führungskanales an dem Verankerungsbereich.

Erfindungsgemäßes Verankerungssystem zur Verankerung eines Fixierungsgegenstandes mittels einer Schraube in einer Bohrung in einem Verankerungsgrund und zur Abdichtung der Bohrung, umfassend einen Dübel zur Einführung in je eine Bohrung in dem Verankerungsgrund und in dem Fixierungsgegenstand, eine Schraube zur Einführung in einen Führungskanal des Dübels, wobei der Dübel als ein in dieser Schutzrechtsanmeldung beschriebener Dübel ausgebildet ist.

In einer weiteren Ausgestaltung ist der Dübel im Wesentlichen, insbesondere vollständig, aus einem identischen Material, insbesondere Kunststoff, ausgebildet. Im Wesentlichen aus dem identischen Material ausgebildet bedeutet vorzugsweise, dass der Dübel zu wenigstens 90 %, 95 % oder 98 % aus dem identischen Material ausgebildet ist, wobei sich um Volumen-% oder Masse-% handelt. Die Materialeigenschaften, beispielsweise die Härte, des Dübels, sind damit an dem im Wesentlichen gesamten Dübel identisch.

In einer ergänzenden Variante sind die Spreizelemente im Wesentlichen sägezahnartig ausgebildet mit einem im Wesentlichen in Radialrichtung verlaufenden hinteren Ende und einem von einem hinteren Ende zu einem vorderen Ende des Dübels sich, vorzugsweise konisch, verjüngenden vorderen Ende. Im Wesentlichen in der radialen Richtung verlaufenden bedeutet vorzugsweise, dass das hintere Ende mit einer Abweichung von weniger als 30°, 20° oder 10° zu der radialen Richtung ausgerichtet ist.

In einer zusätzlichen Variante beträgt die Länge in Längsrichtung des hinteren Abdichtbereiches weniger als 30% der Gesamtlänge des Dübels.

In einer zusätzlichen Ausgestaltung beträgt die Länge in Längsrichtung des Anschlagelementes weniger als 3%, 5% oder 10% der Gesamtlänge des Dübels.

In einer ergänzenden Ausführungsform ist der Führungskanal zwischen dem Verankerungsbereich und dem Zusatzbereich von einem von dem hinteren Ende zu dem vorderen Ende des Dübels, vorzugweise konisch, sich verjüngenden Übergangsbereich begrenzt.

**In** einer weiteren Ausgestaltung ist an einer Innenseite der Dübelhülse an dem Führungskanal ein Innendichtring ausgebildet. Vorzugsweise ist der Innendichtring an dem Abdichtbereich des Dübels ausgebildet. Vorzugsweise ist der Innendurchmesser des Innendichtringes kleiner als der Innendurchmesser außerhalb des Innendichtringes, insbesondere kleiner als der Innendurchmesser des Abdichtbereiches. Vorzugsweise ist der Innendurchmesser des Innendichtringes kleiner als 98 %, 95 %, 90 % oder 85 % des Innendurchmessers des hinteren Abdichtbereiches und/oder eines hinteren Endbereiches des Dübels mit einer Länge von 5 %, 10 %, 15 % oder 20 % der Länge des Dübels.

**In** einer zusätzlichen Variante ist die Länge des zweiten Abschnitts der Schraube ohne Gewinde größer, insbesondere um 5 %, 10 %, 15 %, 20%, 25%, 30% oder 40 % größer, als die Länge des hinteren Abdichtbereiches des Dübels. Während des Einschraubens der Schraube in den Führungskanal des Dübels wird somit der gesamte hintere Abdichtbereich von dem zweiten Abschnitt der Schraube radial nach außen gedehnt, weil der Durchmesser des zweiten Abschnitts der Schraube größer ist als der Innendurchmesser der Dübelhülse an dem Abdichtbereich. Darüber hinaus wird bei einem Einschrauben der Schraube bis der Schraubenkopf auf dem Anschlagelement des Dübels aufliegt auch ein Teil des zweiten Abschnittes der Schraube in den Verankerungsbereich eingeschraubt und dadurch zusätzlich an einem Teilbereich des Verankerungsbereiches eine stärkere radiale Verpressung der Außenseite des Verankerungsbereiches an dem Verankerungsgrund ausgeführt.

**In** einer weiteren Ausführungsform ist der Durchmesser des zweiten Abschnitts der Schraube größer, insbesondere um 2%, 3%, 5 %, 10 %, 15 % oder 20 % größer, als der Innendurchmesser der Dübelhülse an dem Abdichtbereich.

**In** einer weiteren Ausgestaltung ist die Länge der Schraube größer, insbesondere um 5 %, 10 %, 15 %, 20 %, 30%, 40% oder 50 % größer, als die Länge des Dübels. Bei einer vollständig in den Führungskanal des Dübels eingeschraubten Schraube ragt somit die Spitze der Schraube aus der Öffnung an dem vorderen Ende des Dübels heraus und ein hinteres Ende der Schraube ragt aus der Öffnung an dem hinteren Ende des Dübels heraus, insbesondere liegt der Schraubenkopf auf dem Anschlagelement des Dübels auf.

**In** einer ergänzenden Ausgestaltung beträgt die Länge des Verankerungsbereiches zwischen 10 % und 90 %, insbesondere zwischen 30 % und 80 %, der Länge des Dübels.

**In** einer weiteren Variante beträgt die Länge des Abdichtbereiches zwischen 5 % und 70 %, insbesondere zwischen 10 % und 50 %, der Länge des Dübels.

**In** einer weiteren Variante beträgt die Länge des Zusatzbereiches zwischen 5 % und 70 %, insbesondere zwischen 10 % und 50 %, der Länge des Dübels.

**In** einer weiteren Ausgestaltung ist die Dübelhülse an dem Zusatzbereich zylindermantelförmig ausgebildet, insbesondere mit einer im Wesentlichen konstanten Dicke und/oder ohne Berücksichtigung einer Spitze der Dübelhülse.

**In** einer weiteren Ausführungsform weist der Dübel an dem vorderen Verankerungsbereich von dem radialen Ende der Spreizelemente zu der zentrischen Längsachse des Dübels und an dem Zusatzbereich von dem radialen Ende der Zusatzbereiches zu der zentrischen Längsachse des Dübels eine im Wesentlichen konstante radiale Ausdehnung, insbesondere mit einer Abweichung von weniger als 30%, 20% oder 10%, auf.

**In** einer weiteren Variante sind die an der Außenseite des Dübels an dem hinteren Abdichtbereich in Umfangsrichtung ausgebildeten umlaufende Dichtringe als Abdichtmittel vollständig und/oder teilweise umlaufend ausgebildet.

**In** einer ergänzenden Variante ist der Dübel aus, vorzugsweise thermoplastischen, Kunststoff, insbesondere Polyethylen, ausgebildet.

**In** einer weiteren Variante beträgt die Dichte des Materials des Dübels zwischen 0,9 g/cm³ und 1,0 g/cm³, insbesondere zwischen 0,94 g/cm³ und 0,97 g/cm³.

**In** einer weiteren Ausgestaltung ist die Shorehärte (D) des Materials des Dübels größer als 30, 40, 50 oder 55 und/oder kleiner als 90, 80 oder 70. Zweckmäßig sind zwischen den Dichtringen in Umfangsrichtung, insbesondere vollständig, umlaufende Ringnuten ausgebildet.

In einer weiteren Variante beträgt der Elastizitätsmodul des Materials des Dübels bei 23°C zwischen 800 und 1400 N/mm².

in einer weiteren Ausgestaltung ist die Schraube, insbesondere vollständig, aus Metall, insbesondere Stahl, Messing oder Edelstahl ausgebildet.

In einer ergänzenden Variante ist die Innenseite und/oder Außenseite der Dübelhülse eine radiale Innenseite und/oder radiale Außenseite des Dübelhülse.

Vorzugsweise ist an der Außenseite der Dübelhülse an einem hinteren Endbereich wenigstens ein Anschlagelement ausgebildet zur Begrenzung des Einführens des Dübels in die Bohrung des Verankerungsgrundes.

In einer weiteren Ausgestaltung ist das wenigstens eine Anschlagelement als ein radial vorstehender Kragen und/oder Anschlagsteg ausgebildet.

In einer ergänzenden Variante ist der wenigstens eine Längsschlitz in Längsrichtung im Wesentlichen gerade oder gekrümmt, vorzugsweise wendelartig oder schraubenlinienförmig, ausgebildet.

In einer zusätzlichen Ausführungsform ist der wenigstens eine Längsschlitz in Radialrichtung vollständig durchgehend in der Dübelhülse ausgebildet und/oder der wenigstens eine Längsschlitz ist als Längsnut an der Innenseite und/oder Außenseite der Dübelhülse ausgebildet mit einer Restwandung und vorzugsweise ist die radiale Ausdehnung der Restwandung kleiner als die radiale Ausdehnung der Dübelhülse außerhalb des wenigstens einen Längsschlitzes.

In einer ergänzenden Ausführungsform sind mehrere Längsschlitze nacheinander in Längsrichtung an dem Dübel ausgebildet und vorzugsweise wird hinsichtlich der Länge dieser in Längsrichtung nacheinander ausgebildeten Längsschlitze diese Länge als die Summe der Längen dieser Längsschlitze angenommen, d. h. als nur ein Längsschlitz betrachtet.

In einer weiteren Ausführungsform weist der wenigstens eine Längsschlitz eine im Wesentlichen, insbesondere mit einer Abweichung von weniger als 30%, 20% oder 10%, konstante Breite auf und/oder der wenigstens eine Längsschlitz weist eine unterschiedliche Breite auf. Die Breite des wenigstens einen Längsschlitzes ist die Ausdehnung des wenigstens einen Längsschlitzes in Umfangsrichtung, insbesondere an der Außenseite des Dübels.

Vorzugweise ist das Anschlagelement im Wesentlichen in Tangentialrichtung ausgebildet. Das wenigstens eine Anschlagelement weist eine radiale Ausdehnung, eine axiale Ausdehnung und eine tangentiale Ausdehnung auf und die tangentiale Ausdehnung, d. h. Ausdehnung in Umfangsrichtung, ist um das 2-, 4-, 6- oder 8-Fache größer als die radiale und/oder axiale Ausdehnung.

In einer ergänzenden Variante ist der Führungskanal des Dübels in einer Richtung von einem hinteren Ende des Dübels zu dem vorderen Ende des Dübels an wenigstens einem Verjüngungsabschnitt konisch verjüngend ausgebildet, insbesondere an einem Übergangsbereich von dem Abdichtbereich zu dem Verankerungsbereich und/oder von dem Verankerungsbereich zu dem Zusatzbereich.

In einer weiteren Ausgestaltung ist der Führungskanal des Dübels in einer Richtung von einem hinteren Ende des Dübels zu dem vorderen Ende des Dübels an wenigstens einem Durchmesserabschnitt mit einem im Wesentlichen, insbesondere mit einer Abweichung von weniger als 30%, 20% oder 10%, konstanten Durchmesser ausgebildet, insbesondere an dem Abdichtbereich und/oder an dem Verankerungsbereich und/oder an dem Zusatzbereich.

In einer weiteren Ausgestaltung ist die Geometrie und/oder Form der Spreizelemente, insbesondere sämtlicher Spreizelemente identisch.

In einer weiteren Ausgestaltung sind die Spreizelemente einteilig mit dem Dübel, insbesondere der Dübelhülse, verbunden.

Zweckmäßig ist die Dübelhülse des Dübels von der Schraube aufweitbar aufgrund der elastischen und/oder plastischen Eigenschaften der Dübelhülse. In einer weiteren Ausgestaltung ist mit dem Material des Dübels eine Dehnung c = ΔI / l₀ größer als 200% ausführbar.

Im Nachfolgenden wird ein Ausführungsbeispiel der Erfindung unter Bezugnahme auf die beigefügten Zeichnungen näher beschrieben.

Es zeigt:
- Fig. 1: eine Seitenansicht eines Dübels,
- Fig. 2: einen Längsschnitt des Dübels gemäß Fig. 1,

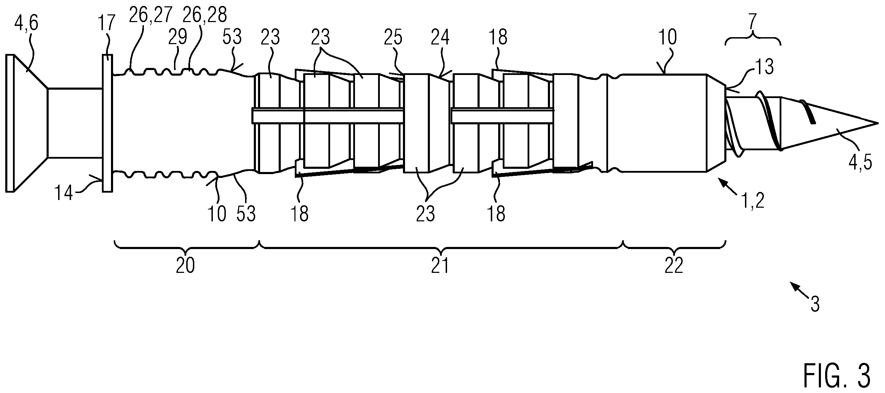

- Fig. 3: eine Seitenansicht eines Verankerungssystems mit dem Dübel gemäß Fig. 1 und einer Schraube,
- Fig. 4: einen Längsschnitt des Verankerungssystems gemäß Fig. 3,
- Fig. 5: einen vergrößerten Längsschnitt des Dübels gemäß Fig. 2 an einem hinteren Abdichtbereich,
- Fig. 6: eine perspektivische Ansicht des Verankerungssystems gemäß Fig. 3,
- Fig. 7: eine perspektivische Ansicht der Schraube gemäß Fig. 3,

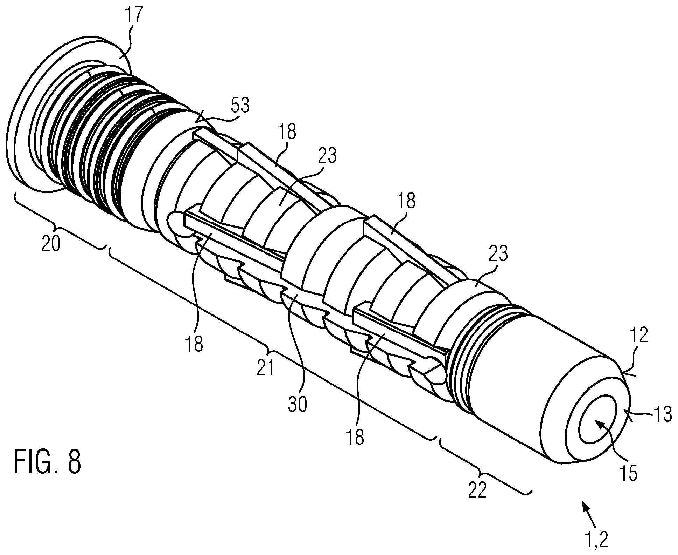

- Fig. 8: eine perspektivische Ansicht des Dübels gemäß Fig. 1 und

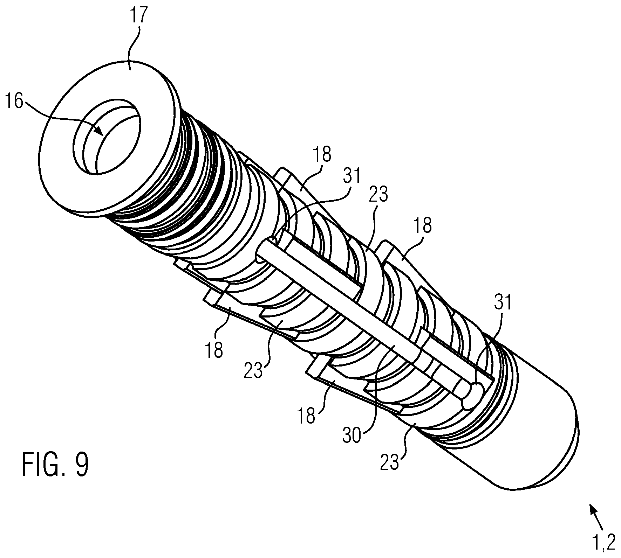

- Fig. 9: eine weitere perspektivische Ansicht des Dübels gemäß Fig. 1.

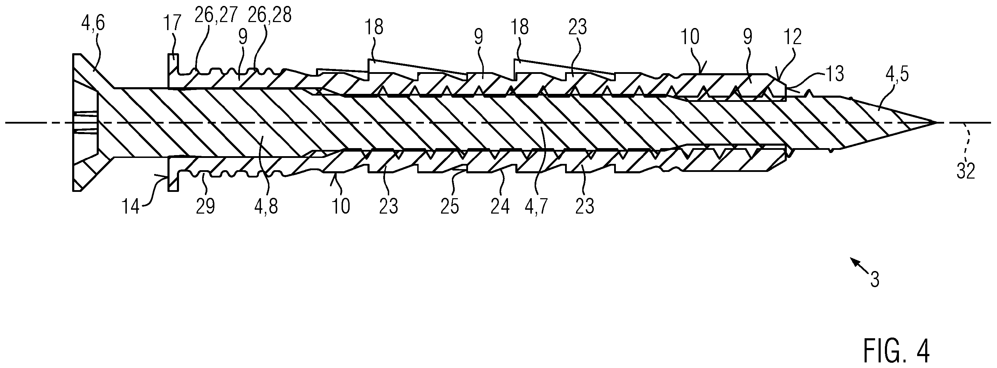

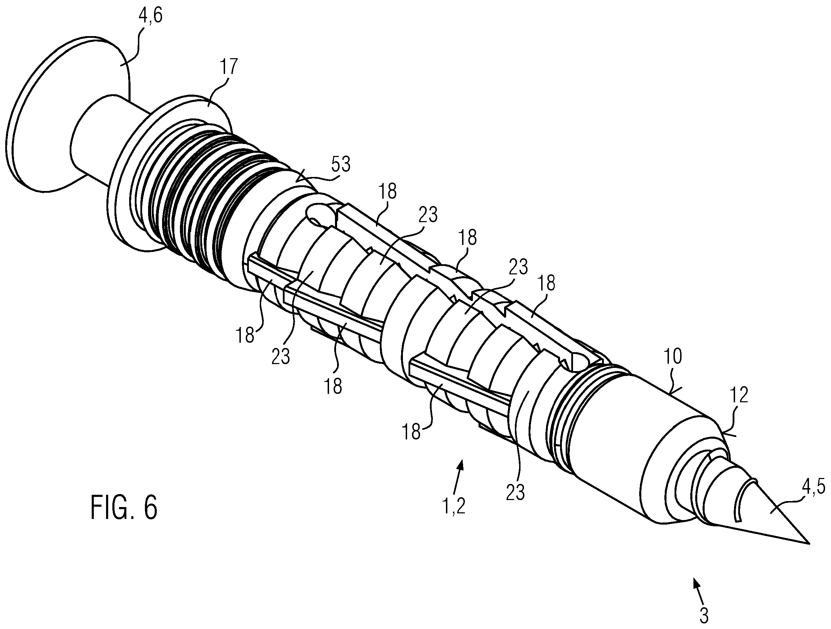

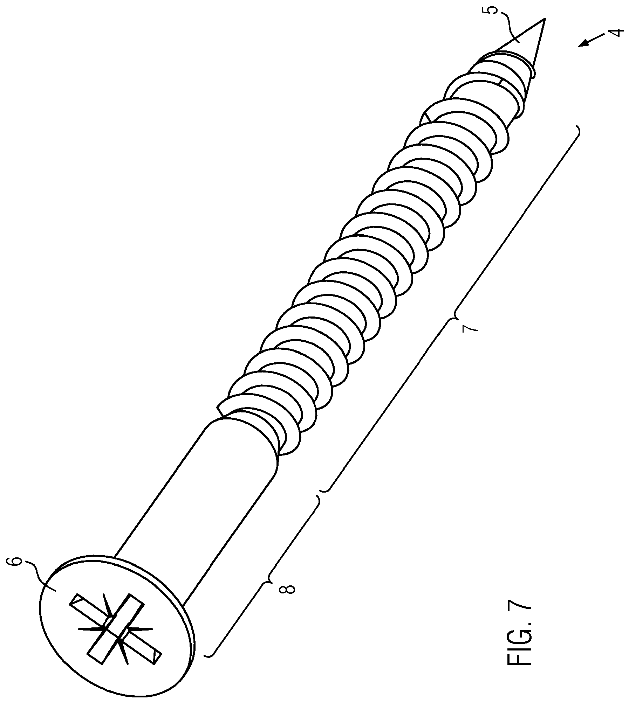

Ein Dübel 1 als Universaldübel 2 dient zur Fixierung eines Fixierungsgegenstandes (nicht dargestellt), beispielsweise eines Bildes, einer Deckenleuchte oder einem Hängeschrank, in einem Verankerungsgrund (nicht dargestellt), beispielsweise einer Wand oder Stahlbetondecke eines Gebäudes. Der Dübel 1 bildet zusammen mit einer Schraube 4 ein Verankerungssystem 3 (Fig. 4 und 6) zur Verankerung eines zu verankernden Fixierungsgegenstandes an dem Verankerungsgrund. Die Schraube 4 aus Metall, vorzugsweise Stahl, insbesondere Edelstahl, mit einer Spritze 5 weist teilweise ein Außengewinde auf. An einem ersten Abschnitt 7 der Schraube 4 weist die Schraube 4 das Außengewinde und einen kleinen Durchmesser auf und an einem zweiten zylinderförmigen Abschnitt 8 weist die Schraube 4 kein Außengewinde und einen größeren Durchmesser auf als an dem ersten Abschnitt 7. Zwischen dem ersten Abschnitt 7 und dem zweiten Abschnitt 8 ist ein konisch sich verjüngender Zwischenabschnitt ohne Außengewinde ausgebildet (Fig. 4 und 7). An einem hinteren Ende der Schraube 4 ist ein Schraubenkopf 6 mit einer Formschlussgeometrie zum Aufbringen eines Drehmomentes auf die Schraube 4 ausgebildet. Der Dübel 1 als ein Universaldübel 2 bzw. ein Allzweckdübel 2 ermöglicht die Fixierung in dem Verankerungsgrund mittels Verknoten (Bildung eines Knotens) und/oder Bildung einer Hintergreifung und/oder Spreizen. Das Spreizen wird dabei insbesondere in Vollbaustoffen als Verankerungsgrund eingesetzt ohne Hohlraum und das Verknoten und/oder die Bildung einer Hintergreifung wird in einem Verankerungsgrund mit einem Hohlraum, beispielsweise einem Hohlziegel, eingesetzt.

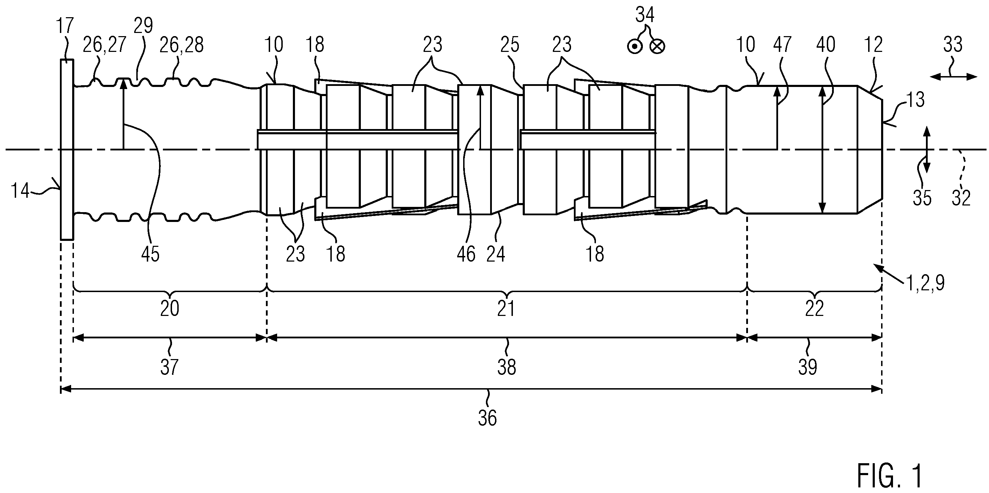

Der Dübel 1 ist im Wesentlichen von einer Dübelhülse 9 gebildet. Der Dübel 1 ist vollständig aus Kunststoff, nämlich **HDPE** (high-desity Polyethylen), ausgebildet. Der Dübel 1 einschließlich sämtlicher geometrischer Ausformungen ist einteilig und einstückig ausgebildet und mittels Spritzgießen in nur einem Spritzgusswerkzeug in einem Arbeitsgang hergestellt. Die zylindermantelförmige Dübelhülse 9 weist eine Außenseite 10 und eine Innenseite 11 auf. Die Innenseite 11 begrenzt einen Führungskanal 19. Der zentrische und axiale Führungskanal 19 ist im Wesentlichen zylinderförmig mit drei unterschiedlichen Durchmessern ausgebildet. Der Führungskanal 19 endet an einem vorderen Ende 13 des Dübels 1 in einer vorderen Öffnung 15 und an einem hinteren Ende 14 des Dübels endet die Dübelhülse 9 in einer hinteren Öffnung 16. Die vordere Öffnung 15 und die hintere Öffnung 16 ist dabei im Wesentlichen kreisförmig ausgebildet in der Querschnittsform. An dem vorderen Endbereich des Dübels 1 ist eine konisch sich verjüngende Spitze 12 ausgebildet. Der Dübel 1 weist eine fiktive zentrische Längsachse 32 auf. Eine Längsrichtung 33 ist parallel zu der Längsachse 32 ausgerichtet, eine Radialrichtung 35 bzw. eine Querrichtung 35 ist senkrecht zu der Längsachse 32 ausgerichtet. Ferner weist der Dübel 1 eine Tangentialrichtung 34 und eine Umfangsrichtung 34 auf umlaufend an der Außenseite 10 des Dübels (Fig. 1). Der Dübel 1 ist in Längsrichtung 33 in drei Bereiche unterteilt, nämlich einen hinteren Abdichtbereich 20, einen mittleren Verankerungsbereich 21 als Spreizbereich 21 und einen vorderen Zusatzbereich 22 als Kopf 22. Der Dübel 1 weist beispielsweise eine Länge 36 von 7 cm auf, wobei diese Länge 36 unterteilt ist in eine Länge 37 des Abdichtbereiches 20 von ungefähr 1,5 cm, eine Länge 38 des Verankerungsbereiches 21 von ungefähr 4 cm und eine Länge 39 des Zusatzbereiches 22 von ungefähr 1 cm sowie einer vernachlässigbaren Länge eines Anschlagelementes 17. Die Länge 38 des Verankerungsbereiches 21 entspricht somit ungefähr, insbesondere mit einer Abweichung von weniger als 30 %, 20 % oder 10 %, der Summe aus der Längen 37, 38 des hinteren Abdichtbereiches 20 und des Zusatzbereiches 22.

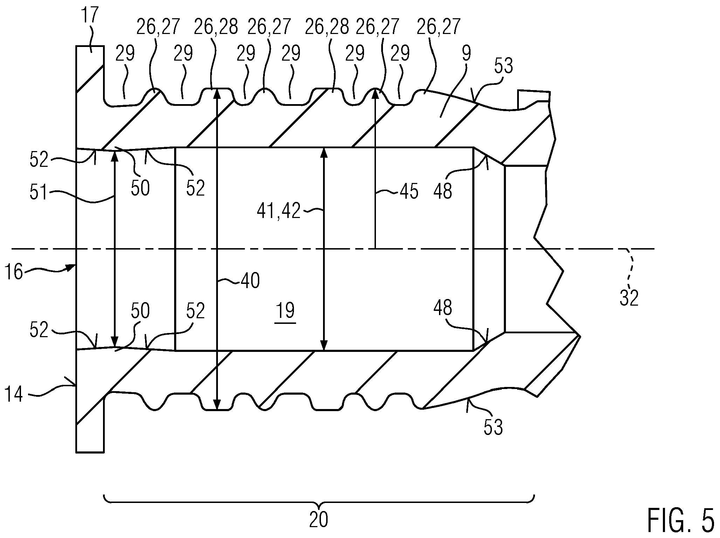

An der Außenseite 10 der Dübelhülse 9 an dem hinteren Abdichtbereich 20 sind vollständig in der Umfangsrichtung 34 umlaufende Dichtringe 26 ausgebildet. Die Dichtringe 26 weisen dabei zwei unterschiedliche Formen auf. Die Dichtringe 26, 27 weisen in dem Längsschnitt gemäß Fig. 5 an einem radialen Endbereich nur eine konvexe Oberfläche auf. Die Dichtringe 26, 28 sind in dem Längsschnitt gemäß Fig. 5 an dem radialen Endbereich eben und konvex ausgebildet. Die Ausdehnung der Dichtringe 28 in Längsrichtung 33 ist somit wesentlich größer, insbesondere um 10 %, 20 %, 30 % oder 40 % größer, als die Ausdehnung der Dichtringe 27 in der Längsrichtung 33. Zwischen den Dichtringen 26 sind somit Ringnuten 29 in Umfangsrichtung 34 ausgebildet. Auch das Volumen der Dichtringe 28 ist wesentlich größer als das Volumen der Dichtringe 27. Das Volumen der Ringnuten 29 zwischen den Dichtringen 26, 27, 28 unterscheidet sich wesentlich. Das Volumen je einer Ringnut 29 entspricht ungefähr, insbesondere mit einer Abweichung von weniger als 10%, 30% oder 50%, dem Volumen des Dichtringes 26 vor dieser Ringnut 29, d. h. dem Dichtring 26 mit dem jeweils größeren Abstand zu dem hinteren Ende 14 des Dübels 1 (Fig. 5). Darüber hinaus ist die Geometrie je einer Ringnut 29 ungefähr komplementär zu der Geometrie des Dichtringes 26 vor dieser Ringnut 29, d. h. dem Dichtring 26 mit dem jeweils größeren Abstand zu dem hinteren Ende 14 des Dübels 1 ausgebildet, wobei die Geometrie der Ringnut 29 gemäß dem Schnitt in Fig. 5 somit der um 180° nach innen geklappten Geometrie des Dichtringes 26 entspricht. Beim Einführen des Dübels 1 in eine Bohrung an einem Verankerungsgrund kann sich somit beispielsweise abgeschabtes Material des Dübels 1, insbesondere Material der Dichtringe 26, in den Ringnuten 29 einlagern, so dass das Einführen des Dübels 1 in die Bohrung von dem abgeschabten Material nicht blockiert wird. Der Dübel 1 weist insgesamt sechs Dichtringe 26 auf. An dem Endbereich der Außenseite 10 des hinteren Abdichtbereiches 20 in Richtung zu dem vorderen Ende 13 des Dübels 1 ist eine Außenverjüngung 53 ausgebildet. Der Außendurchmesser 40 des Abdichtbereiches 20 ist größer als der Außendurchmesser 40 des Verankerungsbereiches 21, sodass die Außenverjüngung 53 beim Einführen des Dübels 1 in die Bohrung an dem Verankerungsgrund eine formschlüssige Blockierung des Einführens des Dübels 1 in die Bohrung des Verankerungsgrundes verhindert. An dem hinteren Ende 14 des Dübels 1 ist außerdem das Anschlagelement 17 als Kragen 17 ausgebildet. Das ringförmige Anschlagelement 17 dient als Anschlag und zur Blockierung beim Einschieben des Dübels 1 in die Bohrung in dem Verankerungsgrund.

An der Außenseite 10 des Verankerungsbereiches 21 als Spreizbereich 21 sind eine große Anzahl an Spreizelementen 23 ausgebildet. Die Spreizelemente 23 sind teilringförmig, d. h. in der Umfangsrichtung 34 nur teilweise mit Unterbrechungen ausgebildet. An einem in Längsrichtung 33 mittleren Bereich sind die Spreizelemente 23 in der Tangentialrichtung 34 vollständig durchgehend ausgebildet, abgesehen von der Unterbrechung an zwei Längsschlitze 30. An einem hinteren Ende 25 der Spreizelemente 23 ist eine im Wesentlichen in Radialrichtung 35 ausgebildete Anschlagfläche vorhanden. An einem vorderen Ende 24 des Spreizelemente 23 ist eine sich verjüngend Rampe ausgebildet. Zwischen dem hinteren Ende 24 mit der Anschlagfläche und dem vorderen Ende 24 als der sich verjüngenden Fläche als Rampenfläche ist ein Bereich des Spreizelemente 23 mit einem konstanten radialen Abstand zu der Längsachse 32 ausgebildet. Die Anschlagfläche an dem hinteren Ende 24 dient zur formschlüssigen Fixierung des Dübels 1 in dem Verankerungsgrund mit der Funktion als Spreizdübel 2. Außerdem sind an der Außenseite 10 des Verankerungsbereiches 21 Verdrehsicherungen 18 ausgebildet. Die Verdrehsicherungen 18 sind im Wesentlichen als in der Längsrichtung 33 verlaufende Stege ausgebildet. Die Ausdehnung der Verdrehsicherungen 18 in der Längsrichtung 33 ist somit wesentlich größer als in der Umfangsrichtung 34, insbesondere ist die Ausdehnung in der Längsrichtung 33 um das 2-, 4-, 6-, oder 8-Fache größer als die Ausdehnung in der Umfangsrichtung 34. Darüber hinaus nimmt die radiale Ausdehnung eines radialen Endes der Verdrehsicherungen 18 zu der zentrischen Längsachse 32 in Richtung zu dem vorderen Ende 13 des Dübel 1 ab, d. h. das radiale Ende der Verdrehsicherungen 18 ist verjüngend, insbesondere konisch verjüngend, ausgebildet in Richtung zu dem vorderen Ende 13 des Dübels 1. Aufgrund dieser sich, insbesondere stetig, verjüngenden Ausbildung des radialen Endes der Verdrehsicherungen 18 blockieren die Verdrehsicherungen 18 nicht das Einführen des Dübels 1 in den Verankerungsgrund. Die Verdrehsicherungen 18 gewährleisten, dass während des Einschraubens der Schraube 4 in den Führungskanal 19 das von der Schraube 4 auf die Innenseite 11 der Dübelhülse 9 aufgebrachte Drehmoment nicht zu einer Rotationsbewegung des Dübels 1 in der Bohrung in dem Verankerungsgrund führt, d. h. die Außenseiten der Verdrehsicherungen 18 in Umfangsrichtung führen zu einer formschlüssigen Fixierung des Dübels 1 in dem Verankerungsgrund. In dem Verankerungsbereich 21 sind außerdem 2 gegenüberliegende Längsschlitze 30 ausgebildet. Die diametral gegenüberliegenden Längsschlitze 30 weisen an den Enden je eine Aufweitung 31 auf. Die Aufweitungen 31 sind von einer konkav gekrümmten Oberfläche des Materials des Dübels 1 begrenzt. Die Längsschlitze 30 in Kombination mit den Aufweitungen 31 erhöhten die Verformbarkeit des Dübels 1 und reduzieren damit die Steifigkeit des Dübels 1, so dass Knoten und Hintergreifungen bereits bei geringeren, auf den Dübel 1 wirkenden Kräften und Momenten entstehen. Die Folge ist, dass bei der notwendigen Bildung von Knoten und Hintergreifungen sich in vorteilhafter Weise weniger Risse in dem Dübel 1 bilden. Die Bildung von Knoten und Hintergreifungen sind zur formschlüssigen Fixierung des Universaldübel 1 in Hohlräumen des Verankerungsgrundes notwendig. Knoten und Hintergreifungen sind Verformungen des Dübels 1 aufgrund einer Verkleinerung der Länge 36 des Dübels 1 und weisen einen größeren radialen Abstand zu der zentrischen Längsachse 32 des Dübels 1 auf als die Außenseite 10 des Dübels 1 vor der Verformung. Die Längsschlitze 30 weisen eine im Wesentlichen konstante Breite auf, d. h. vorzugsweise eine konstante Breite mit einer Abweichung von weniger als 30%, 20% oder 10%.

An dem vorderen Endbereich des Dübels 1 ist der Zusatzbereich 22 als Kopf 22 ausgebildet. Der Zusatzbereich 22 bildet damit das vordere Ende 13 des Dübels 1. Der hintere Abdichtbereiches 20 bildet das hintere Ende 14 des Dübels 1. In der Längsrichtung 33 ist somit der Verankerungsbereich 21 zwischen dem Zusatzbereich 22 und dem hinteren Abdichtbereiches 20 ausgebildet. Der Zusatzbereich 22 ist im Wesentlichen, abgesehen von der konisch sich verjüngend den Spitze 22, zylindermantelförmig ausgebildet. An der Außenseite 10 des Zusatzbereiches 22 sind keine Erhebungen ausgebildet. Der Zusatzbereich 22 hat die Funktion einer Mutter. Soweit in dem Verankerungsgrund an der Bohrung Hohlräume vorhanden sind führt die Rotationsbewegung der Schraube 4 dazu, dass sich der Zusatzbereich 22 als Spindel auf der Schraube 4 in Richtung zu dem hinteren Ende 14 des Dübels 1 bewegt und dabei der übrige Dübel 1, insbesondere an dem Verankerungsbereich 21, in Längsrichtung 34 zusammengeschoben wird und sich dadurch wenigstens ein Knoten und/oder wenigstens eine Hintergreifung mit einer großen radialen Ausdehnung ausbildet welcher in den Hohlraum an dem Verankerungsgrund in der Radialrichtung 35 eingeführt wird, sodass dadurch der gebildete wenigstens eine Knoten und/oder wenigstens eine Hintergreifung gleichsam als Anker formschlüssig in dem Hohlraum des Verankerungsgrundes fixiert wird. Dies ermöglicht die effektive Ausbildung des Dübels 1 als Universaldübel 2 mit der Bildung des wenigstens einen Knotens und/oder der wenigstens einen Hintergreifung.

Der Dübel 1 weist einen Außendurchmesser 40 und einen Innendurchmesser 41 auf. In dem Abdichtbereich 20 weist der Dübel 1 einen Innendurchmesser 42 auf. In dem Verankerungsbereich 21 weist der Dübel 1 einen Innendurchmesser 43 auf. In dem Zusatzbereich 22 weist der Dübel 1 einen Innendurchmesser 44 auf. Der Innendurchmesser 44 an dem Zusatzbereich 22 des Dübels 1 ist kleiner als der Innendurchmesser 43 an dem Verankerungsbereich 21, insbesondere kleiner als 98 %, 95 %, 90 % oder 85 % des Innendurchmessers 43 an dem Verankerungsbereich 21. Der Innendurchmesser 43 an dem Verankerungsbereich 21 ist kleiner als der Innendurchmesser 42 an dem Abdichtbereich 20, insbesondere kleiner als 98 %, 95 %, 90 % oder 85 % des Innendurchmessers 42 an dem Abdichtbereich 20. In dem Führungskanal 19 ist somit zwischen dem Abdichtbereich 20 und dem Verankerungsbereich 21 ein Übergangsbereich 48 als ein sich, insbesondere konisch, verjüngender Übergangsbereich 48 ausgebildet. In dem Führungskanal 19 ist somit zwischen dem Verankerungsbereich 21 und dem Zusatzbereich 22 ein Übergangsbereich 49 als ein sich, insbesondere konisch, verjüngender Übergangsbereich 49 ausgebildet. Der Innendurchmesser 44 an dem Zusatzbereich 22 ist wesentlich, insbesondere um wenigstens 10%, 20% oder 30%, kleiner als der Durchmesser der Schraube 4 an dem ersten Abschnitt 7. Damit tritt während des Einschraubens der Schraube 4 in den Zusatzbereich 22 mit der Funktion als Mutter ein starker Anstieg des notwendigen Drehmomentes zum Einschrauben der Schraube auf. Damit dieser Anstieg des notwendigen Drehmomentes nicht in einer sehr kurzen Zeit während des Einschraubens erfolgt ist der Übergangsbereich 49 als sich konisch verjüngend der Phase ausgebildet. An dem Führungskanal 19 des Abdichtbereiches 20 ist im Bereich der hinteren Öffnung 16 ein Innendichtring 50 ausgebildet (Fig. 5). Der Innendurchmesser 51 des Innendichtringes 50 ist kleiner als der Innendurchmesser 42 an dem übrigen Abdichtbereich 20 außerhalb des Innendichtringes 50. Der Innendichtring 50 ist von zwei Verjüngungen 52 ausgebildet in Richtung zu dem Innendichtring 50 an dem Bereich mit dem minimalen Innendurchmesser 51. Der Innendichtring 50 dient zur effektiven Abdichtung zwischen der Schraube 4, d. h. dem zweiten Abschnitt 8 der Schraube 4 und der Innenseite 11 der Dübelhülse 9 an dem Innendichtring 50. Aufgrund des kleinen Innendurchmesser 51 des Innendichtringes 50 liegt der Innendichtring 50 mit einer besonders großen radialen Druckkraft auf der Außenseite des zweiten Abschnittes 8 der Schraube 4 auf.

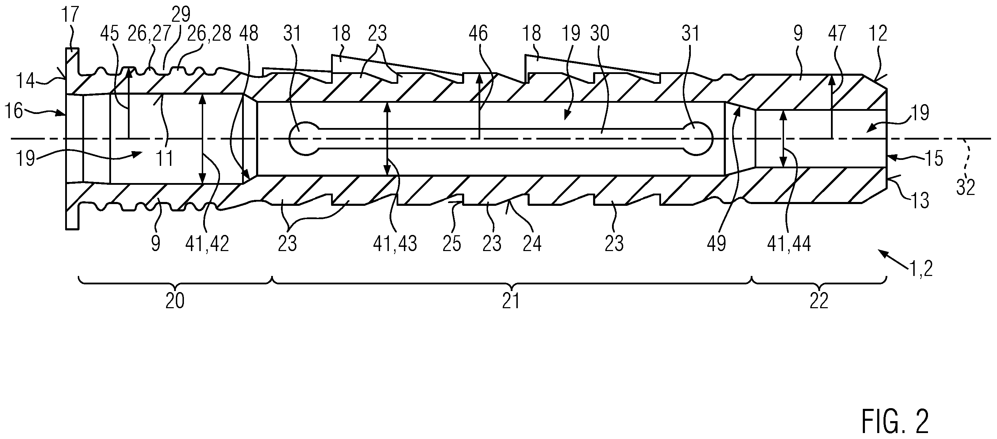

Die Dichtringe 26 weisen eine maximale radiale Ausdehnung 45 von dem radialen Ende des Dichtringes 26 zu der zentrischen Längsachse 32 auf. Die Spreizelemente 23 weisen von dem radialen Ende der Spreizelemente 23 zu der zentrischen Längsachse 32 eine maximale radiale Ausdehnung 46 auf Fig. 2). Die Außenseite 10 des Zusatzbereiches 22 weist von dem, insbesondere radialen Ende, zu der zentrischen Längsachse 32 eine maximale radiale Ausdehnung 47 auf. Die maximale radiale Ausdehnung 47 der Außenseite 10 des Dübels 1 an dem Zusatzbereich 22 entspricht im Wesentlichen, insbesondere mit einer Abweichung von weniger als 30 %, 20 %, 10 % oder 5 %, der maximalen radialen Ausdehnung 46 des radialen Endes der Spreizelemente 23 zu der zentrischen Längsachse 32.

Die maximale radiale Ausdehnung 46 des radialen Endes der Spreizelemente 23 zu der zentrischen Längsachse 32 ist kleiner als die maximale radiale Ausdehnung 45 von dem radialen Ende der Dichtringe 26 zu der zentrischen Längsachse 32, insbesondere kleiner als 98 %, 95 %, 90 % oder 85 % der maximalen radialen Ausdehnung 45 von dem radialen Ende der Dichtringe 26 zu der zentrischen Längsachse 32. Die Dichtringe 26 weisen somit, abgesehen von dem Anschlagelement 17, den maximalen radialen Abstand zu der zentrischen Längsachse 32 auf, sodass dadurch die Dichtringe 26 mit der größten radialen Druckkraft auf dem Verankerungsgrund aufliegen und dadurch eine sehr effektive Abdichtung der Bohrung in dem Verankerungsgrund zu der Außenseite 10 des Dübels 1 gewährleistet ist. Die Dichtringe 28 mit dem größeren Volumen fungieren insbesondere zur Erhöhung der radialen Druckkraft zwischen der Innenseite 11 des Dübels 1 und der Schraube 4 an dem zweiten Abschnitt 8, so dass damit insbesondere die Dichtheit zwischen der Schraube 4 und dem Dübel 1 erhöht wird. Die Dichtringe 27 mit dem kleineren Volumen fungieren insbesondere zur Erhöhung der Dichtheit zwischen dem Dübel 1 und dem Verankerungsgrund in der Bohrung.

Das Verankerungssystem 3 ist von dem Dübel 1 und der Schraube 4 gebildet (Fig. 4 und 6). Zur Ausbildung des Verankerungssystems 3 wird zunächst mit einem nicht dargestellten Bohrer in den Verankerungsgrund eine Bohrung eingearbeitet. Anschließend wird in diese Bohrung der Dübel 1 eingeführt, bis der Anschlagring 17 an dem Verankerungsgrund und an dem äußeren Ende der Bohrung aufliegt. Anschließend wird die Spitze 5 der Schraube 4 in die Öffnung 16 an dem hinteren Ende 14 des Dübels 1 eingeführt und anschließend mittels der Formschlusselemente an dem Schraubenkopf 6 ein Drehmoment auf die Schraube 4 aufgebracht, sodass dadurch die Schraube 4 in eine Rotationsbewegung um die zentrische Längsachse 32 der Schraube 4 versetzt wird. Dabei sind die Schraube 4 und der Dübel 1 im Wesentlichen koaxial und konzentrisch zueinander ausgerichtet. Während des Einschraubens der Schraube 4 in den Führungskanal 19 des Dübels 1 wird das Gewinde des ersten Abschnittes 7 der Schraube 4 in das Material an der Innenseite 11 des Dübels 1 eingedrückt, insbesondere an dem Verankerungsbereich 20 und dem Zusatzbereich 22, sodass hier an der Innenseite 11 ein entsprechendes Innengewinde von dem Außengewinde des ersten Abschnittes 7 der Schraube 4 eingearbeitet wird. Die Schraube 4 wird solange eingeschraubt, bis die Spitze 5 der Schraube 4 durch die Öffnung 15 des Dübels 1 durchgeführt ist und aus dem Führungskanal 19 herausragt (Fig. 4). Der Außendurchmesser des zweiten Abschnittes 8 der Schraube 4 ist größer, insbesondere um 5 %, 10 %, 20 % oder 30 % größer, als der Innendurchmesser 42 der Dübelhülse 9 an dem Abdichtbereich 20, sodass dadurch der Abdichtbereich 20 mit den Dichtringen 26 mit einer besonders großen radialen Druckkraft auf den Verankerungsgrund gepresst ist und dadurch eine sehr effektive Abdichtung gewährleistet ist. Der Durchmesser des ersten Abschnittes 7 der Schrauben 4 und auch der Durchmesser des zweiten Abschnittes 8 der Schraube 4 sind größer als der Innendurchmesser 43 der Dübelhülse 9 an dem Verankerungsgrund, sodass dadurch aufgrund des Einschraubens der Schraube 4 in den Dübel 1 die Spreizelemente 23 mit einer großen radialen Druckkraft in den Verankerungsgrund eingedrückt und dadurch eine form- und kraftschlüssige Verbindung zwischen den Spreizelementen 23 und dem Verankerungsgrund hergestellt wird. Soweit in dem Verankerungsgrund Hohlräume vorhanden sind, bewirkt das weitere Einschrauben der Schraube 4 eine Bewegung des Zusatzbereiches 22 als funktionelle Mutter in der Längsrichtung 33 in Richtung zu dem hinteren Ende 14 des Dübels 1, sodass dadurch von dem übrigen Dübel 1 außerhalb des Zusatzbereiches 22, insbesondere von dem Verankerungsbereich 21, wenigstens ein Knoten und/oder wenigstens eine Hinterschneidung gebildet wird und die Länge 36 des Dübels 1 verkleinert wird.

Insgesamt betrachtet sind mit dem erfindungsgemäßen Dübel 1 und dem erfindungsgemäßen Verankerungssystem 3 wesentliche Vorteile verbunden. Der Dübel 1 ist einteilig ausschließlich in nur einem Spritzgussvorgang mittels Spritzgießen preiswert hergestellt. Aufgrund der Materialeigenschaften des Kunststoffes des Dübels 1 und der geometrisch konstruktiven Ausbildung, beispielsweise mit den Dichtringen 26 an der Außenseite 10 der Dübelhülse 9 und dem Innendichtring 50 an der Innenseite 11 der Dübelhülse 9 ist eine besonders effektive und zuverlässige Abdichtung der Bohrung in dem Verankerungsgrund gewährleistet. Feuchtigkeit und Wasser, insbesondere in Nassräumen wie Bädern, gelangen damit nicht in die Bohrung des Verankerungsgrundes, sodass dadurch in vorteilhafter Weise hieraus resultierende Schäden an einem Gebäude ausgeschlossen sind.

## Patentansprüche

1. Dübel (1) zur Verankerung eines Fixierungsgegenstandes mittels einer Schraube (4) in einer Bohrung in einem Verankerungsgrund und zur Abdichtung der Bohrung, umfassend
- eine Dübelhülse (9) mit einer Innenseite (11) und einer Außenseite (10), die einen vorderen Verankerungsbereich (21) zur Verankerung in dem Verankerungsgrund und einen hinteren Abdichtbereich (20) mit Abdichtmittel (26) zur Abdichtung der Bohrung mit dem Dübel (1) und der Schraube (4) umfasst,
- an der Außenseite (10) des Dübels (1) an dem hinteren Abdichtbereich (20) in Umfangsrichtung (34) umlaufende Dichtringe (26) ausgebildet sind als Abdichtmittel (26),
- einen in Längsrichtung (33) sich erstreckenden Führungskanal (19), der von der Innenseite (11) der Dübelhülse (9) begrenzt ist, zur Aufnahme der Schraube (4),
- Spreizelemente (23), die an dem vorderen Verankerungsbereich (21) an der Außenseite (10) ausgebildet sind,
- wobei der Dübel (1) einteilig ausgebildet ist und der Innendurchmesser (43) des Führungskanales (19) an dem Verankerungsbereich (21) kleiner ist als der Innendurchmesser (42) des Führungskanales (19) an dem Abdichtbereich (20),
**dadurch gekennzeichnet, dass**
der Führungskanal (19) zwischen dem Abdichtbereich (20) und dem Verankerungsbereich (21) von einem von dem hinteren Ende (14) zu dem vorderen Ende (13) des Dübels (1) sich konisch verjüngenden Übergangsbereich (48) begrenzt ist und in Längsrichtung (33) zwischen den Dichtringen (26) Ringnuten (29) ausgebildet sind und das Volumen je einer Ringnut (29) mit einer Abweichung von weniger als 30% dem Volumen des Dichtringes (26) vor dieser Ringnut (29) entspricht.

2. Dübel nach Anspruch 1,
**dadurch gekennzeichnet, dass**
die Länge (37) in Längsrichtung (33) des hinteren Abdichtbereiches (20) wenigstens 10% oder 15% der Gesamtlänge (36) des Dübels (1) beträgt.

3. Dübel nach einem oder mehreren der vorhergehenden Ansprüche,
**dadurch gekennzeichnet, dass**
die Anzahl der Dichtringe (26) größer als 2 oder 3 ist.

4. Dübel nach einem oder mehreren der vorhergehenden Ansprüche,
**dadurch gekennzeichnet, dass**
die Dichtringe (26) eine unterschiedliche Form und/oder ein unterschiedliches Volumen aufweisen.

5. Dübel nach einem oder mehreren der vorhergehenden Ansprüche,
**dadurch gekennzeichnet, dass**
in Längsrichtung (33) zwischen den Dichtringen (26) Ringnuten (29) ausgebildet sind und das Volumen je einer Ringnut (29) im Wesentlichen, insbesondere mit einer Abweichung von weniger als 20% oder 10%, dem Volumen des Dichtringes (26) vor dieser Ringnut 29 entspricht.

6. Dübel nach einem oder mehreren der vorhergehenden Ansprüche,
**dadurch gekennzeichnet, dass**
an dem Dübel (1) wenigstens ein Längsschlitz (30), vorzugsweise zwei diametral gegenüberliegende Längsschlitze (30), ausgebildet ist bzw. sind, um die Bildung von wenigstens einem Knoten und/oder wenigstens einer Hintergreifung zu erleichtern.

7. Dübel nach Anspruch 6,
**dadurch gekennzeichnet, dass**
an je einem Ende, insbesondere an beiden Enden, des je wenigstens einen Längsschlitzes (30) eine Aufweitung (31) ausgebildet ist und vorzugsweise die Aufweitung (31) von einer konkav gekrümmten Oberfläche des Materials des Dübels (1) begrenzt ist, um die Bildung von wenigstens einem Knoten und/oder wenigstens einer Hintergreifung zu erleichtern.

8. Dübel nach Anspruch 6 oder 7,
**dadurch gekennzeichnet, dass**
die Außenfläche oder die Summe der Außenflächen des wenigstens einen Längsschlitzes (30) zwischen 1% und 40%, insbesondere zwischen 3% und 30% der Gesamtaußenfläche des Dübels (1) beträgt.

9. Dübel nach einem oder mehreren der vorhergehenden Ansprüche,
**dadurch gekennzeichnet, dass**
maximale radiale Ausdehnung (45) des Dübels (1) an dem hinteren Abdichtbereich (20) von dem radialen Ende der Dichtringe (26) zu einer zentrischen Längsachse (32) des Dübels (1) größer ist als die maximale radiale Ausdehnung (46) an dem vorderen Verankerungsbereich (21) von dem radialen Ende der Spreizelemente (23) zu der zentrischen Längsachse des Dübels (1).

10. Dübel nach einem oder mehreren der vorhergehenden Ansprüche,
**dadurch gekennzeichnet, dass**
an einem vorderen Endbereich des Dübels (1) ein Zusatzbereich (22) als Kopf (22) ausgebildet ist.

11. Dübel nach Anspruch 10,
**dadurch gekennzeichnet, dass**
an der Außenseite (11) des Zusatzbereiches (22) keine radialen Vorsprünge, insbesondere keine Spreizelemente (23), ausgebildet sind.

12. Dübel nach einem oder mehreren der vorhergehenden Ansprüche,
**dadurch gekennzeichnet, dass**
die Länge in Längsrichtung (33) des hinteren Abdichtbereiches (20) weniger als 30% der Gesamtlänge des Dübels (1) beträgt.

13. Dübel nach einem oder mehreren der Ansprüche 10 bis 12,
**dadurch gekennzeichnet, dass**
der Innendurchmesser (44) des Führungskanales (19) an dem Zusatzbereich (22) kleiner ist als der Innendurchmesser (43) des Führungskanales (19) an dem Verankerungsbereich (21).

14. Dübel nach einem oder mehreren der vorhergehenden Ansprüche,
**dadurch gekennzeichnet, dass**
an dem Endbereich der Außenseite (10) des hinteren Abdichtbereiches (20) in Richtung zu dem vorderen Ende (13) des Dübels (1) eine Außenverjüngung (53) ausgebildet ist.

15. Verankerungssystem (2) zur Verankerung eines Fixierungsgegenstandes mittels einer Schraube (4) in einer Bohrung in einem Verankerungsgrund und zur Abdichtung der Bohrung, umfassend
- einen Dübel (1) zur Einführung in je eine Bohrung in dem Verankerungsgrund,
- eine Schraube (3) zur Einführung in einen Führungskanal (13) des Dübels (1),
**dadurch gekennzeichnet, dass**
der Dübel (1) gemäß einem oder mehrerer der vorhergehenden Ansprüche ausgebildet ist.

## Claims

1. Screw anchor (1) for anchoring, by means of a screw (4) in a hole in an anchoring base, an object to be fixed, and for sealing the hole, comprising
- a screw anchor sleeve (9) having an inner face (11) and an outer face (10), which screw anchor sleeve comprises a front anchoring region (21) for anchoring in the anchoring base and a rear sealing region (20) having sealing means (26) for sealing the hole by means of the screw anchor (1) and the screw (4),
- peripheral sealing rings (26) are formed as the sealing means (26) on the outer face (10) of the screw anchor (1) at the rear sealing region (20) in a circumferential direction (34),
- a guide channel (19) extending in a longitudinal direction (33) and delimited by the inner face (11) of the screw anchor sleeve (9), which guide channel is for receiving the screw (4),
- spreading elements (23) which are formed on the outer face (10) at the front anchoring region (21),
- the screw anchor (1) being formed in a single piece and the inner diameter (43) of the guide channel (19) at the anchoring region (21) being smaller than the inner diameter (42) of the guide channel (19) at the sealing region (20),
**characterized in that**
the guide channel (19) is delimited between the sealing region (20) and the anchoring region (21) by a transition region (48) which tapers conically from the rear end (14) to the front end (13) of the screw anchor (1), and ring grooves (29) are formed between the sealing rings (26) in the longitudinal direction (33) and the volume of each ring groove (29) corresponds, having a deviation of less than 30%, to the volume of the sealing ring (26) in front of this ring groove (29).

2. Screw anchor according to claim 1,
**characterized in that**
the length (37) in the longitudinal direction (33) of the rear sealing region (20) is at least 10% or 15% of the total length (36) of the screw anchor (1).

3. Screw anchor according to one or more of the preceding claims,
**characterized in that**
the number of sealing rings (26) is greater than 2 or 3.

4. Screw anchor according to one or more of the preceding claims,
**characterized in that**
the sealing rings (26) have a different shape and/or a different volume.

5. Screw anchor according to one or more of the preceding claims,
**characterized in that**
ring grooves (29) are formed in the longitudinal direction (33) between the sealing rings (26) and the volume of each ring groove (29) corresponds substantially, in particular having a deviation of less than 20% or 10%, to the volume of the sealing ring (26) in front of this ring groove 29.

6. Screw anchor according to one or more of the preceding claims,
**characterized in that**
at least one longitudinal slot (30), preferably two diametrically opposite longitudinal slots (30), is or are formed on the screw anchor (1) in order to facilitate the formation of at least one nub and/or at least one undercut.

7. Screw anchor according to claim 6,
**characterized in that**
a widening (31) is formed at each end, in particular at the two ends, of each at least one longitudinal slot (30) and the widening (31) is preferably delimited by a concavely curved surface of the material of the screw anchor (1) in order to facilitate the formation of at least one nub and/or at least one undercut.

8. Screw anchor according to claim 6 or 7,
**characterized in that**
the outer surface or the total of the outer surfaces of the at least one longitudinal slot (30) is between 1% and 40%, in particular between 3% and 30% of the total outer surface of the screw anchor (1).

9. Screw anchor according to one or more of the preceding claims,
**characterized in that**
a maximum radial extension (45) of the screw anchor (1) at the rear sealing region (20) from the radial end of the sealing rings (26) to a central longitudinal axis (32) of the screw anchor (1) is greater than the maximum radial extension (46) at the front anchoring region (21) from the radial end of the spreading elements (23) to the central longitudinal axis of the screw anchor (1).

10. Screw anchor according to one or more of the preceding claims,
**characterized in that**
an additional region (22) is formed as a head (22) at a front end region of the screw anchor (1).

11. Screw anchor according to claim 10,
**characterized in that**
no radial projections, in particular no spreading elements (23), are formed on the outer face (11) of the additional region (22).

12. Screw anchor according to one or more of the preceding claims,
**characterized in that**
the length in the longitudinal direction (33) of the rear sealing region (20) is less than 30% of the total length of the screw anchor (1).

13. Screw anchor according to one or more of claims 10 to 12,
**characterized in that**
the inner diameter (44) of the guide channel (19) at the additional region (22) is smaller than the inner diameter (43) of the guide channel (19) at the anchoring region (21).

14. Screw anchor according to one or more of the preceding claims,
**characterized in that**
an outer taper (53) is formed at the end region of the outer face (10) of the rear sealing region (20) in the direction toward the front end (13) of the screw anchor (1).

15. Anchoring system (2) for anchoring, by means of a screw (4) in a hole in an anchoring base, an object to be fixed, and for sealing the hole, comprising
- a screw anchor (1) for inserting into each hole in the anchoring base,
- a screw (3) for inserting into a guide channel (13) of the screw anchor (1),
**characterized in that**
the screw anchor (1) is designed according to one or more of the preceding claims.

## Revendications

1. Cheville (1) pour l'ancrage d'un objet de fixation au moyen d'une vis (4) dans un alésage dans un support d'ancrage et pour l'étanchéisation de l'alésage, comprenant
- une douille de cheville (9) comportant un côté intérieur (11) et un côté extérieur (10), laquelle comprend une zone d'ancrage avant (21) pour l'ancrage dans le support d'ancrage et une zone d'étanchéité arrière (20) comportant un moyen d'étanchéité (26) pour l'étanchéisation de l'alésage avec la cheville (1) et la vis (4),
- des bagues d'étanchéité (26) s'étendant dans la direction périphérique (34) sont réalisées en tant que moyens d'étanchéité (26) sur le côté extérieur (10) de la cheville (1), au niveau de la zone d'étanchéité arrière (20),
- un canal de guidage (19) s'étendant dans la direction longitudinale (33), lequel est délimité par le côté intérieur (11) de la douille de cheville (9), pour la réception de la vis (4),
- des éléments d'écartement (23) qui sont réalisés au niveau de la zone d'ancrage avant (21) sur le côté extérieur (10),
- dans laquelle la cheville (1) est réalisée en une seule pièce et le diamètre intérieur (43) du canal de guidage (19) au niveau de la zone d'ancrage (21) est plus petit que le diamètre intérieur (42) du canal de guidage (19) au niveau de la zone d'étanchéité (20),
**caractérisée en ce que**
le canal de guidage (19) entre la zone d'étanchéité (20) et la zone d'ancrage (21) est délimité par une zone de transition (48) se rétrécissant de manière conique depuis l'extrémité arrière (14) jusqu'à l'extrémité avant (13) de la cheville (1) et des rainures annulaires (29) sont réalisées dans la direction longitudinale (33) entre les bagues d'étanchéité (26) et le volume de chaque rainure annulaire (29) correspond avec un écart inférieur à 30 % au volume de la bague d'étanchéité (26) avant ladite rainure annulaire (29).

2. Cheville selon la revendication 1,
**caractérisée en ce que**
la longueur (37) dans la direction longitudinale (33) de la zone d'étanchéité arrière (20) représente au moins 10 % ou 15 % de la longueur totale (36) de la cheville (1).

3. Cheville selon l'une ou plusieurs des revendications précédentes,
**caractérisée en ce que**
le nombre de bagues d'étanchéité (26) est supérieur à 2 ou 3.

4. Cheville selon l'une ou plusieurs des revendications précédentes,
**caractérisée en ce que**
les bagues d'étanchéité (26) présentent des formes différentes et/ou des volumes différents.

5. Cheville selon l'une ou plusieurs des revendications précédentes,
**caractérisée en ce que**
des rainures annulaires (29) sont réalisées dans la direction longitudinale (33) entre les bagues d'étanchéité (26) et le volume de chaque rainure annulaire (29) correspond sensiblement, en particulier avec un écart de moins de 20 % ou 10 %, au volume de la bague d'étanchéité (26) avant ladite rainure annulaire (29).

6. Cheville selon l'une ou plusieurs des revendications précédentes,
**caractérisée en ce que**
au moins une fente longitudinale (30), de préférence deux fentes longitudinales (30) diamétralement opposées, sont réalisées sur la cheville (1) afin de faciliter la formation d'au moins un renflement et/ou d'au moins une contre-dépouille.

7. Cheville selon la revendication 6,
**caractérisée en ce que**
un élargissement (31) est réalisé à chaque extrémité, en particulier aux deux extrémités, de respectivement au moins une fente longitudinale (30) et, de préférence, l'élargissement (31) est délimité par une surface à courbure concave du matériau de la cheville (1), afin de faciliter la formation d'au moins un renflement et/ou d'au moins une contre-dépouille.

8. Cheville selon la revendication 6 ou 7,
**caractérisée en ce que**
la surface extérieure ou la somme des surfaces extérieures de l'au moins une fente longitudinale (30) représente entre 1 % et 40 %, en particulier entre 3 % et 30 %, de la surface extérieure totale de la cheville (1).

9. Cheville selon l'une ou plusieurs des revendications précédentes,
**caractérisée en ce que**
l'extension radiale maximale (45) de la cheville (1) au niveau de la zone d'étanchéité arrière (20) depuis l'extrémité radiale des bagues d'étanchéité (26) jusqu'à un axe longitudinal central (32) de la cheville (1) est supérieure à l'extension radiale maximale (46) au niveau de la zone d'ancrage avant (21) depuis l'extrémité radiale des éléments d'écartement (23) jusqu'à l'axe longitudinal central de la cheville (1).

10. Cheville selon l'une ou plusieurs des revendications précédentes,
**caractérisée en ce que**
une zone supplémentaire (22) est réalisée en tant que tête (22) au niveau d'une zone d'extrémité avant de la cheville (1).

11. Cheville selon la revendication 10,
**caractérisée en ce que**
aucune saillie radiale, en particulier aucun élément d'écartement (23), n'est réalisé sur le côté extérieur (11) de la zone supplémentaire (22).

12. Cheville selon l'une ou plusieurs des revendications précédentes,
**caractérisée en ce que**
la longueur dans la direction longitudinale (33) de la zone d'étanchéité arrière (20) est inférieure à 30 % de la longueur totale de la cheville (1).

13. Cheville selon l'une ou plusieurs des revendications 10 à 12,
**caractérisée en ce que**
le diamètre intérieur (44) du canal de guidage (19) au niveau de la zone supplémentaire (22) est plus petit que le diamètre intérieur (43) du canal de guidage (19) au niveau de la zone d'ancrage (21).

14. Cheville selon l'une ou plusieurs des revendications précédentes,
**caractérisée en ce que**
un rétrécissement extérieur (53) est réalisé au niveau de la zone d'extrémité du côté extérieur (10) de la zone d'étanchéité arrière (20) en direction de l'extrémité avant (13) de la cheville (1).

15. Système d'ancrage (2) pour l'ancrage d'un objet de fixation au moyen d'une vis (4) dans un alésage dans un support d'ancrage et pour l'étanchéisation de l'alésage, comprenant
- une cheville (1) destinée à être introduite dans respectivement un alésage dans le support d'ancrage,
- une vis (3) destinée à être introduite dans un canal de guidage (13) de la cheville (1),
**caractérisé en ce que**
la cheville (1) est réalisée conformément à l'une ou à plusieurs des revendications précédentes.
